**Europäisches Patentamt**

**European Patent Office**

**Office européen des brevets**

(19)

(11) Veröffentlichungsnummer: **0 025 243**

**A1**

(12)

# EUROPÄISCHE PATENTANMELDUNG

(21) Anmeldenummer: **80200787.2**

(22) Anmeldetag: **13.08.80**

(51) Int. Cl.³: **H 02 K 53/00**

(30) Priorität: **14.08.79 DE 2933209**
**28.04.80 EP 80102297**

(43) Veröffentlichungstag der Anmeldung:
**18.03.81 Patentblatt 81/11**

(84) Benannte Vertragsstaaten:
**BE FR GB IT SE**

(71) Anmelder: **Zickler, Fritz**

**D-2322 Gottesgabe(DE)**

(72) Erfinder: **Zickler, Fritz**

**D-2322 Gottesgabe(DE)**

(54) **Verfahren zur Abfallminderung und Kapazitätserhöhung bei Kraftwerken.**

(57) Verfahren zur Beseitigung von Abgabe radioaktiver Dämpfe und Abwässer bei Kernkraftwerken und zur Verringerung des Bedarfs der erforderlichen Brennmaterialien für Kernkraftwerke und herkömmliche Kraftwerke.

Das Verfahren dient zur Umwandlung eines Kraftwerks mit ursprünglich hohem Brennstoffverbrauch, in geringeren Verbrauch bei gleicher Leistung (Kraftwerksneubau)-oder Umwandlung in mehrfache Leistung bei gleichen Rohstoffbedarf bzw. Brennstoffbedarf und Abfallmenge (bei bestehenden Kraftwerken).

Und Erhöhung der Sicherheit bei Kernkraftwerken durch die Kühlstraße, bei gleichzeitiger Verringerung des radioaktiven Abfalls bei Brennstäben, bei Kapazitätserhöhung und Wegfall der schädlichen radiaktiven Dämpfe und Abwässer, da diese im Kreislauf der Kühlstraße verbleiben. Die Kühlstraße nimmt auch das Kondenswasser auf. Die Kühlstraße wird bei Kernkraftwerks-Neubauten unter das Reaktorgebäude verlegt, bei Altbauten außerhalb des Reaktorgebäudes mit Zuleitung und Ableitung zum Reaktor.

Das Verfahren zur Verringerung des Bedarfs der eforderlichen Brennmaterialien für Kraftwerke wird dadurch erreicht, daß bei bestehenden Kraftwerken der erzeugte Strom nicht direkt an der Verbraucher weiter-gegeben wird Er wird einem Elektromotor anderer Größenordnung zugeleitet, der mit einem Generator erhöhter Kapazität direkt verbunden ist und einen Block bildet. Erst die vervielfachte Kapazität wird an den Endverbraucher abgegeben.

Bei Kraftwerksneubauten kann dementsprechend die Anfangs Kapazität (Erzeugungskapazität) verringert werden, (wie bereits angegeben) wodurch der eigentlich Spar-Effekt bei Brennstoffen und Abfällen erzielt wird. Dieser Spar-Effekt wird bei Altbauten durch die Erhöhung - oder Vervielfältigung der Kapazität erreicht.

./...

Fig. 2

Brennelement          \Turbine

**alter Block**          **zusätzlicher Block**

Generator 2,5 MW

Dampf

Brenn-element

Wasser

Turbine

Pumpe

Kühlrippen

Strom-zuleitung

E. Motor   Generator 10 MW

Strom-Endabgabe

Beschreibung

1  Verfahren zur Beseitigung von Abgabe radioaktiver Dämpfe
und Abwässer bei Kernkraftwerken - und zur Verringerung
der Abfälle und der erforderlichen Brennmaterialien bei
Kernkraftwerken und herkömmlichen Kraftwerken, bei
gleichzeitiger Kapazitätserhöhung.

Anwendungsgebiet

2  Das Verfahren kann bei allen herkömmlichen - und bei
Kernkraftwerken angewendet werden. Das direkte Anwendungs=
gebiet ist, technische Anlagen  wie Kraftwerke zur Strom=
erzeugung. Durch das Patent direkt betroffen werden:

3  Kapazität des Gesamt-Rohstoffverbrauchs (Kohle, Uran,
Wasser, Öl und Wind usw.)
Kapazität der Feurungsanlage, Kapazität des Dampfkessels,
Kapazität der Turbine und der Nebenanlagen.

4  Das Verfahren macht daher bei gewünschter Kapazitäts=
erhöhung, bei gewünschter Verringerung der Abfallmengen-
und bei Beseitigung der Abgabe von radioaktiven Dämpfen
und Abwässern technische Änderungen erforderlich. In ab=
gewandelter Form bei Alt- oder Neubau von Kraftwerken.

5  Stand der Technik
Der jetzige Stand der Technik kennt dieses Verfahren
nicht. Es sind im Bereich des Kraftwerkbaues zur Strom=
erzeugung keine spürbaren Verfahren zur wesentlichen und
spürbaren Einsparung von Rohstoffen wie z.B. Kohle und
Öl bekannt. Man kennt nur vollen Rohstoffverbrauch bei
erheblich verringerter Energiemenge als Wiedergabewert.

6  Würdigung des bisherigen Standes der Technik

Der jetzige Stand der Technik ist zwar teilweise in sei=
ner Ausführung verbessert und verfeinert worden, hat aber
nie die Möglichkeit genutzt, rohstoff-sparsamer und kos=
tengünstiger zu arbeiten - und stellt in der heutigen Zeit
der Rohstoffverkappung, eine Rohstoffverschwendung dar.

7  Darstellung der Erfindung, wie sie in den Patentansprüchen
gekennzeichnet ist

Das Verfahren soll das alte herkömmliche Verfahren der
Stromerzeugung, durch ein neues und rohstoffsparendes
und Abfall verringerndes Verfahren ablösen. Diese Aufgabe
wird erfindungsgemäß dadurch gelöst, daß die bisherige
oder neu zu errichtende Kraftwerksanlage, nur ein Fünftel
der bisherigen- oder zu erzielenden Anfangskapazität er=
hält.

8  Der dann erzeugte Strom wird nicht an den Verbraucher
weiter-geleitet. Er wird einem Elektromotor  anderer
Größenordnung zugeleitet. Diesem Elektromotor wird ein
Generator ursprünglicher Kapazität direkt angeschlossen
(bei Neubau).

9  Der dann erzeugte Strom entspricht der bisherigen geplan=
ten Kapazität, bei wesentlich verringerten Rohstoffbedarf
und verringerter Abfallhergabe.

Fortsetzung

Beschreibung

Abgewandelt bei Kraftwerksaltbauten, wird die bisherige Abgabe des Stroms an den Endverbraucher unterbrochen.

Jetzt wird der bisher erzeugte Strom einem Elektromotor anderer Größenordnung zugeführt- und einem Generator mit erhöhter Kapazität zugeleitet. Erst der dann erzeugte Strom mit erheblich vermehrter Kapazität, wird dann dem Endverbraucher zugeleitet.

Der jetzige Stand der Technik erlaubt es, Elektromotoren und Generatoren für dieses Verfahren herzustellen, wie eine Überprüfung an der Christian-Albrechts-Universität in Kiel ergab. Das Verfahren ermöglicht es, die Kapazität bestehender Kraftwerke zu vervielfachen. Und dies trifft für alle Arten von Kraftwerken zur Stromerzeugung zu.

Vorteilhafte Wirkungen

Die vorteilhaften Wirkungen bestehen darin, daß das Verfahren
a) bei Kraftwerksneubauten bei geringen Rohstoff oder Antriebsbedarf wesentliche Leistungserhöhung und Abfall minderung,
b) bei Kraftwerksaltbauten eine Kapazitätserhöhung bei gleichem Brennstoff-oder Antriebsbedarf und Abfallmenge,
c) auch bei anderen Kraftwerkstypen anwendbar ist.

Bei Kernkraftwerken wird das Verfahren dahingehend ergänzt, daß das radioaktive Abwasser und der Dampf nicht wie bisher an die Außenwelt abgegeben wird, sondern in einer kraftwerkseigenen Kühlstraße, im ständigen Kreislauf weiter genutzt wird.

Vorteilhafte Wirkung bei Kernkraftwerken

a) Kapazitätserhöhung bei gleicher Abfallmenge des Kernbrennstoffs bei Altbauten,
b) Senkung der Abfälle bei Neubauten, bei gleicher Kapazität (radioaktive Abfälle bei den Brennstäben),
c) Risikosenkung durch bessere Kühlung und Minderung des Kühlwasserbedarfs.

Schädliche Abdämpfe und Abwässer brauchen bei Kernkraftwerken nicht mehr an die Außenwelt abgegeben werden und vermindern dadurch das Risiko für Krebserkrankungen bzw. heben es auf; soweit diese Krankheiten von Kernkraftwerken verursacht werden.

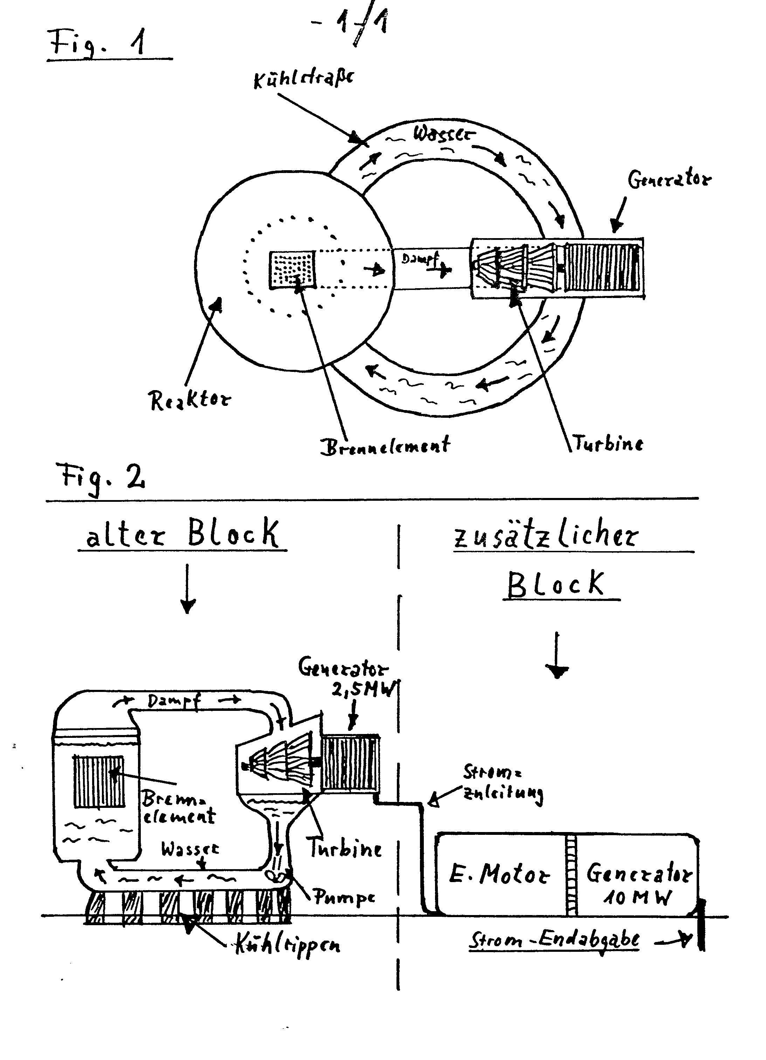

Beschreibung des Weges zur Ausführung der Erfindung
Wie aus der Zeichnung auch ersichtlich, erfolgt die Durchführung der Erfindung dadurch, daß an den bestehenden oder geplanten Kraftwerksblock, ein weiterer Block, bestehend aus einem Elektromotor erheblich größerer Kapazität- und einem Generator mit gleicher Antriebsstärke (passend zum E.Motor) zur Kapazitätserhöhung angefügt wird.

Fortsetzung

Beschreibung

Beschreibung des Weges zur Ausführung der Erfindung

Der bisher an den Endverbraucher weitergeleitete Strom, wird jetzt dem angefügten Kraftwerksblock zugeleitet. Erst die vom angefügten (zusätzlich) Kraftwerksblock erzeugte Strommenge wird dann an den Endverbraucher ab= gegeben.

Bei der Kühlung bei Kernkraftwerken, wird die Erfindung so zur Ausführung gebracht (siehe Zeichnung), daß unter dem Kraftwerksblock (Neubauten) eine ringförmige Kühl= wasser-Straße daß Abwasser und Kondenswasser aufnimmt und gekühlt wieder an den Reaktor abgibt bzw. heran= führt.

<u>Patentanspruch Verringerung des Bedarfs der erforderlichen
Brennstoffe bei herkömmlichen und Kernkraftwerken,</u>
dadurch gekennzeichnet, daß dem bisherigen technischen
Teil der Stromerzeugungskraftwerke eine Ergänzung durch
einen Generator mit dem bis zu fünffachen der bisherigen
Kapazität beigefügt wird. Dieser Generator ist direkt
mit einem Elektromotor verbunden. Der Elektromotor wird
vom herkömmlichen Teil des Kraftwerks gespeist.
Die Ergänzung ergibt den Patent-Hauptanspruch:
" Strom-mehrerzeugung bei gleicher Brennstoff-oder Roh=
stoff-menge".


<u>Patentanspruch Verringerung der anfallenden Abfälle
nach Anspruch 1,</u>
dadurch gekennzeichnet, daß die Endkapazität des erzeug=
ten Stromes ( erhöhte Kapazität ) einen höheren Anfall
an Abfällen nicht mehr bringt- wie er bei herkömmlichen
und Kernkraftwerken sonst angefallen wäre.

Fig. 1

Fig. 2

0025243

Nummer der Anmeldung

EP 80 20 0787

Europäisches
Patentamt

**EUROPÄISCHER RECHERCHENBERICHT**

| **EINSCHLÄGIGE DOKUMENTE** | | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| | BE - A - 421 583 (ISMAILOFF)<br><br>* Seite 2, Zeilen 10-33; Figur *<br><br>-- | 1,2 | H 02 K 53/00 |
| | FR - A - 1 081 255 (BATISSE et al)<br><br>* Seite 1, linke Spalte, Zeilen 1-33; Seite 1, rechte Spalte, Zeilen 1-11; Figur *<br><br>-- | 1,2 | |
| | GB - A - 237 759 (DEHN)<br><br>* Seite 3, Zeilen 65-102; Seite 4, Zeilen 35-104; Figuren 1,2 *<br><br>---- | 1,2 | **RECHERCHIERTE SACHGEBIETE (Int Cl )**<br><br>H 02 K 53/00 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-11-1980 | TIO |

EPA form 1503.1 06.78